# EUROPÄISCHE PATENTSCHRIFT

(11) **EP 2 640 554 B1**
(45) Veröffentlichungstag und Bekanntmachung des Hinweises auf die Patenterteilung: **29.03.2017**
(21) Anmeldenummer: 11769864.7
(22) Anmeldetag: 12.10.2011
(51) Int. Cl.: B25F 1/04, B25B 23/06

(54) **MOTORISCH BETRIEBENE WERKZEUGMASCHINE, INSBESONDERE HANDWERKZEUGMASCHINE**
MOTOR-POWERED MACHINE TOOL, IN PARTICULAR A HAND-HELD MACHINE TOOL
MACHINE-OUTIL À MOTEUR, EN PARTICULIER MACHINE-OUTIL PORTATIVE

(30) Priorität: 17.11.2010 DE 102010044061
(43) Veröffentlichungstag der Anmeldung: 25.09.2013
(73) Patentinhaber: Robert Bosch GmbH, 70442 Stuttgart (DE)
(72) Erfinder: NAGY, Attila, H-3521 Miscolc-Slirma (HU)
(86) Internationale Anmeldenummer: PCT/EP2011/067812
(87) Internationale Veröffentlichungsnummer: WO 2012/065789

(56) Entgegenhaltungen:
- DE-A1- 10 013 984
- DE-A1-102006 059 688
- US-A- 5 065 498

## Beschreibung

### Stand der Technik

Die Erfindung betrifft eine motorisch betriebene Werkzeugmaschine, insbesondere eine Handwerkzeugmaschine, nach dem Oberbegriff des Anspruchs 1.

Eine derartige Werkzeugmaschine ist bereits aus der DE 10 2006 059 688 A1 der Anmelderin bekannt. Die bekannte Werkzeugmaschine weist ein trommelartiges Werkzeugmagazin auf, in dem jeweils ein Werkzeug in einer Werkzeugkammer angeordnet ist. Das Werkzeugmagazin lässt sich in seiner Längsachse drehen, so dass eine Werkzeugkammer in Ausrichtung mit einem rohrförmigen Überschiebekanal angeordnet werden kann, über den ein benötigtes Werkzeug in eine Aufnahme der Werkzeugmaschine überschoben werden kann bzw. aus der Werkzeugaufnahme wieder in die Werkzeugkammer zurückgebracht werden kann. Hierzu dient ein manuell betätigbares Überschiebeelement, das im Wesentlichen stiftförmig ausgebildet ist und mittels eines Handgriffs, der das Gehäuse in der Gehäuseoberseite durchsetzt, betätigt werden kann. Aufgrund des relativ langen Verschiebeweges benötigt der von dem Bediener betätigbare Griff einen relativ langen Verschiebeweg an der Gehäuseoberseite. Dadurch weist das Gehäuse auch eine relativ große bzw. langgestreckte Öffnung für den Griff auf, der den Eintritt von Schmutz bzw. Verunreinigen in das Gehäuseinnere begünstigt. Darüber hinaus ist die Gestaltung der Gehäuseoberseite eingeschränkt bzw. andere Bedingungselemente müssen an anderen Stellen des Gehäuses angeordnet werden.

### Offenbarung der Erfindung

Ausgehend von dem dargestellten Stand der Technik liegt der Erfindung die Aufgabe zugrunde, eine motorisch betriebene Werkzeugmaschine, insbesondere eine Handwerkzeugmaschine, nach dem Oberbegriff des Anspruchs 1 derart weiterzubilden, dass sie zumindest im Bereich der Überschiebeeinrichtung, die das Gehäuse durchsetzt, möglichst kompakt ausgebildet ist. Diese Aufgabe wird bei einer motorisch betriebenen Werkzeugmaschine mit den Merkmalen des Anspruchs 1 gelöst. Der Erfindung liegt dabei die Idee zugrunde, das Überschiebeelement mit einer Getriebeeinrichtung zu koppeln, die wenigstens ein Zahnrad umfasst, dessen Rotationsbewegung in eine Linearbewegung des Überschiebeelements übertragen wird. Eine derartige Ausbildung ermöglicht den Vorteil, dass beliebig große Verschiebewege bei relativ geringem Platzbedarf für das manuell betätigbare Bedienelement verwirklicht werden können. Insbesondere wird es dadurch ermöglicht, das manuell betätigbare Bedienelemente in Form eines Drehknopfes bzw. einer Drehscheibe auszubilden, die nur einen relativ geringen Ausschnitt in dem Gehäuse benötigt, so dass die äußere Gestaltung des Gehäuses an der Gehäuseoberseite gegenüber dem Stand der Technik freier gestaltbar ist, wobei gleichzeitig eine gute und einfache Abdichtung des Gehäuses im Bereich des Bedienelements ermöglicht wird.

Vorteilhafte Weiterbildungen der erfindungsgemäßen motorisch betriebenen Werkzeugmaschine sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

Bevorzugt ist eine Ausführungsform, bei der das wenigstens eine Zahnrad mit einem manuell betätigbaren Verstellelemt gekoppelt ist. Hierbei kann das Verstellelement, wie bereits erläutert, insbesondere als Drehschalter bzw. Drehknopf, oder aber als Schiebeschalter ausgebildet sein. Eine derartige Ausbildung des Verstellelements ist relativ preiswert herstellbar und benötigt im Vergleich zu einem motorisch betätigbaren Antrieb einen relativ geringen Raumbedarf.

Insbesondere ist es dabei vorgesehen, dass das Verstellelement eine Öffnung des Gehäuses durchsetzt. Hierdurch wird ein einfaches Greifen des Verstellelements von außen durch den Bediener ermöglicht.

Ganz besonders bevorzugt ist es, dass das Verstellelement zum Gehäuse hin abgedichtet angeordnet ist. Dadurch wird der Eintritt bzw. der Zutritt von Schmutz, Staub oder ähnlichem in das Gehäuseinnere verhindert, so dass die Werkzeugmaschine besonders zuverlässig über deren gesamte Lebensdauer arbeitet.

Um die Drehbewegung des Zahnrades in eine Linearbewegung des Überschiebeelements umzusetzen, ist es in einer bevorzugten konstruktiven Ausgestaltung der Erfindung vorgesehen, dass das Überschiebeelement zumindest bereichsweise als Zahnstange ausgebildet ist. Dadurch wird ein mechanisch relativ einfacher Aufbau ermöglicht, der preiswert herstellbar ist und zuverlässig arbeitet.

Besonders bevorzugt ist weiterhin eine Ausführungsform, bei der mehrere Zahnräder vorgesehen sind, die eine Wegübersetzung des Verstellelements an dem Überschiebeelement erzeugen. Mit anderen Worten gesagt bedeutet dies, dass beispielsweise mit einer relativ geringen Drehbewegung an dem Verstellelement ein relativ großer Verschiebeweg an dem Überschiebeelement erzeugt wird. Dadurch wird für den Bediener die Handhabung insofern erleichtert, dass beispielsweise kein Umgreifen am Verstellelement erforderlich ist, um einen bestimmten Verschiebeweg zu erzeugen.

Besonders bevorzugt ist es weiterhin, wenn das Überschiebeelement mit einer Verzahnung auf einander gegenüberliegenden Seiten in Eingriff mit jeweils einem Zahnrad angeordnet ist. Dadurch wird eine besonders gute bzw. definierte Führung des Überschiebeelements ermöglicht.

Kritisch beim Überschieben von Werkzeugen in die Werkzeugaufnahme ist die winkelgerechte Zuführung des mit einer Außenkontur versehenen Werkzeuges in die mit einer damit korrespondierenden Innenkontur versehenen Werkzeugaufnahme. Hierbei kann es zum Verkanten des Werkzeugs zur Werkzeugaufnahme kommen, was die Bedienung erschwert, da der Vorgang gegebenenfalls so lange wiederholt werden muss, bis eine entsprechende Winkelposition zwischen dem Werkzeug und der Werkzeugaufnahme erreicht ist. Deshalb wird in einer besonders bevorzugteren Ausgestaltung der Erfindung vorgeschlagen, dass an die Werkzeugaufnahme an deren Innenumfang eine Innenkontur und an dem Werkzeug eine Außenkontur ausgebildet ist, die miteinander zusammenwirken und eine drehfeste Anordnung des Werkzeugs zumindest in einer axialen Endposition des Werkzeugs in der Werkzeugaufnahme bewirken, und dass an dem Innenumfang der Werkzeugaufnahme auf der dem Überschiebeelement zugewandten Seite ein Bereich mit wenigstens einer Einlaufführung ausgebildet ist, die beim Überschieben des Werkzeugs in die Werkzeugaufnahme eine winkelgerechte Ausrichtung des Werkzeugs zur Werkzeugaufnahme bewirkt.

Alternativ ist es jedoch auch denkbar, dass die Werkzeugaufnahme eine Innenkontur und das Werkzeug eine Außenkontur aufweist, die miteinander zusammenwirken und eine drehfeste Anordnung des Werkzeugs zumindest in einer axialen Endposition des Werkzeugs in der Werkzeugaufnahme bewirken, und dass die am Innenumfang der Werkzeugaufnahme ausgebildete Innenkontur mehrere Längsrippen mit Einlaufkanten aufweist.

Bei der Verwendung von Längsrippen kann es konstruktiv vorgesehen sein, dass die Längsrippen im Querschnitt eine gerundete oder dreieckige Form aufweisen. Derartige Formen lassen sich relativ einfach und genau herstellen und eignen sich daher besonders zur Verwendung bei der Werkzeugaufnahme.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen vereinfachten Längsschnitt durch eine motorisch betriebene Werkzeugmaschine gemäß dem Stand der Technik,
- Fig. 2: einen vereinfachten Längsschnitt durch eine erfindungsgemäße motorisch betriebene Werkzeugmaschine,
- Fig. 3 und 4: Teile der Werkzeugmaschine gemäß Fig. 2 zur Erläuterung der Funktionalität des Werkzeugwechselmagazins in vereinfachter Seitenansicht bzw. Längsschnitt,
- Fig. 5: einen ersten erfindungsgemäßen Überschiebemechanismus in Seitenansicht,
- Fig. 6: einen Schnitt in der Ebene VI-VI der Fig. 5,
- Fig. 7: einen zweiten erfindungsgemäßen Überschiebemechanismus in einer Seitenansicht,
- Fig. 8: einen Schnitt in der Ebene VIII-VIII der Fig. 7,
- Fig. 9: einen dritten erfindungsgemäßen Überschiebemechanismus in einer Unteransicht,
- Fig. 10: den Überschiebemechanismus gemäß Fig. 9 in einer Seitenansicht,
- Fig. 11: eine Werkzeugaufnahme im Längsschnitt,
- Fig. 12: einen Schnitt in der Ebene XII-XII der Fig. 11,
- Fig. 13: ein Detail der Fig. 11 in vergrößerter Darstellung,
- Fig. 14: eine modifizierte Werkzeugaufnahme im Längsschnitt,
- Fig. 15: einen Schnitt in der Ebene XV-XV der Fig. 14 bei einer ersten Ausführungsvariante und
- Fig. 16: einen Schnitt in der Ebene XV-XV der Fig. 14 bei einer gegenüber der Figur 15 abgewandelten Ausführungsvariante.

Gleiche Bauteile bzw. Bauteile mit gleicher Funktion sind in den Figuren mit den gleichen Bezugsziffern versehen.

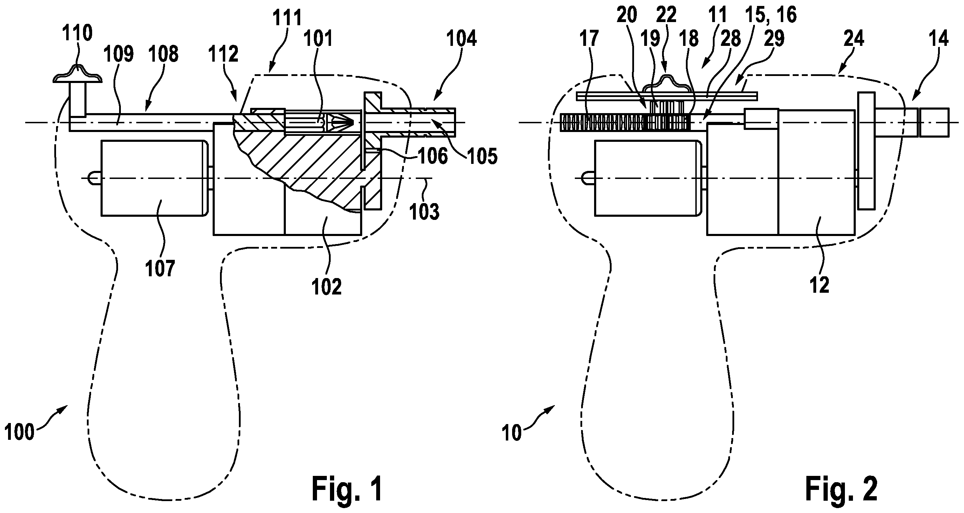

In der Fig. 1 ist eine motorisch betriebene Werkzeugmaschine 100 in Form einer Handwerkzeugmaschine gemäß dem Stand der Technik stark vereinfacht dargestellt. Hierbei ist die Werkzeugmaschine 100 in Form eines sogenannten "BitSchraubers" ausgebildet, der zur Handhabung verschiedener Werkzeuge 101 in Form von Bit-Einsätzen geeignet ist. Die Werkzeuge 101 sind in in der Fig. 1 nicht dargestellten Kammern eines revolverartigen Werkzeugmagazins 102 angeordnet, wobei das Werkzeugmagazin 102 in einer Längsachse 103 drehbar gelagert angeordnet ist. Die Werkzeugmaschine 100 weist ferner eine Werkzeugaufnahme 104 auf, die einen rohrförmigen Bereich 105 hat, in den das jeweils zu verwendende Werkzeug 101 aus dem Werkzeugmagazin 102 eingeschoben wird. Zum Austausch gegen ein neues Werkzeug 101 wird die Werkzeugaufnahme 104 in Überdeckung mit einer leeren Kammer des Werkzeugmagazins 102 gedreht. Die Werkzeugaufnahme 104 ist zum Antreiben des Werkzeugs 101 über eine Getriebeverzahnung 106 mit einem Antriebsmotor 107 gekoppelt, der eine entsprechende Drehbewegung der Werkzeugaufnahme 104 erzeugt, wobei im Antriebsfall das Werkzeug 101 drehfest in der Werkzeugaufnahme 104 angeordnet ist.

Das Überschieben eines Werkzeugs 101 aus der Kammer des Werkzeugmagazins 102 in den rohrförmigen Bereich 105 der Werkzeugaufnahme 104 erfolgt beim Stand der Technik mittels eines Überschiebeelements 108 in Form eines Schiebers 109. Der Schieber 109 weist dabei einen von einem Bediener manuell betätigbaren Griff 110 auf, der das Gehäuse 111 der Werkzeugmaschine 100 im Bereich einer Öffnung 112 des Gehäuses 111 durchgreift. Das dem Werkzeug 101 zugewandte Ende des Schiebers 109 ist beispielsweise magnetisch ausgebildet, um eine magnetische Anbindung des Werkzeugs 101 mit dem Schieber 109 zu verwirklichen, die insbesondere dann erforderlich ist, wenn das Werkzeug 101 aus der Werkzeugaufnahme 104 in die Kammer des Werkzeugmagazins 102 zurückgezogen wird.

Ferner weist die Werkzeugmaschine 100 nicht dargestellte Verstellmittel zum Drehen des Werkzeugmagazins 102 in seiner Längsachse 103 auf, damit die mit dem gewünschten Werkzeug 101 ausgestattete Kammer des Werkzeugmagazins 102 in Ausrichtung mit dem Schieber 109 bzw. der Werkzeugaufnahme 104 gedreht werden kann. Bzgl. weiterer Einzelheiten einer Werkzeugmaschine 100 nach dem Stand der Technik wird darüber hinaus auf die DE 10 2006 059 688 A1 der Anmelderin verwiesen.

In der Fig. 2 ist der prinzipielle Aufbau einer erfindungsgemäßen Werkzeugmaschine 10 dargestellt, die sich von der Werkzeugmaschine 100 gemäß dem Stand der Technik gemäß der Fig. 1 insbesondere im Bereich des Überschiebemechanismus 11 für das Überführen eines Werkzeugs 101 aus dem Werkzeugmagazin 12 in die Werkzeugaufnahme 14 unterscheidet.

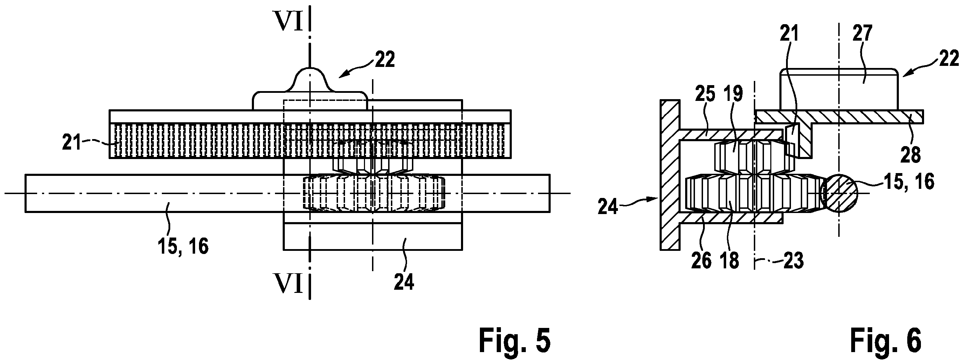

Der Überschiebemechanismus 11 weist ein Überschiebeelement 15 in Form eines Schiebers 16 auf, das zumindest bereichsweise in Form einer Zahnstange mit einer Verzahnung 17 ausgebildet ist. Die Verzahnung 17 wirkt dabei mit wenigstens einem, insbesondere aber mit wenigstens zwei, in der Fig. 2 erkennbaren Zahnrädern 18, 19 zusammen, die ein Getriebe 20 ausbilden. Das eine Zahnrad 18 kämmt mit der Verzahnung 17 des Schiebers 16, während das andere Zahnrad 19, wie am besten anhand einer Zusammenschau der Fig. 5 und 6 erkennbar ist, mit einer Verzahnung 21 eines manuell betätigbaren Drehschalters 22 zusammenwirkt. Die beiden Zahnräder 18, 19 weisen einen unterschiedlichen Durchmesser auf und sind in einer gemeinsamen Drehachse 23 zueinander drehfest gelagert. Zur Lagerung der beiden Zahnräder 18, 19 dient eine in der Fig. 6 nicht erkennbare Achse, die in zwei am Gehäuse 24 der Werkzeugmaschine 10 angeordneten Querträgern 25, 26 gelagert ist.

Wie insbesondere aus einer Zusammenschau der Fig. 2 und 6 erkennbar ist, weist der Drehschalter 22 einen von den Fingern des Bedieners fassbaren Drehknopf 27 auf, an den sich auf der dem Zahnrad 19 zugewandten Seite eine kreisförmige Platte 28 anschließt. Die Platte 28 verschließt eine Öffnung 29 des Gehäuses 24, wobei der Bereich zwischen der Platte 28 und der Öffnung 29 am Gehäuse 24 abgedichtet ausgebildet ist.

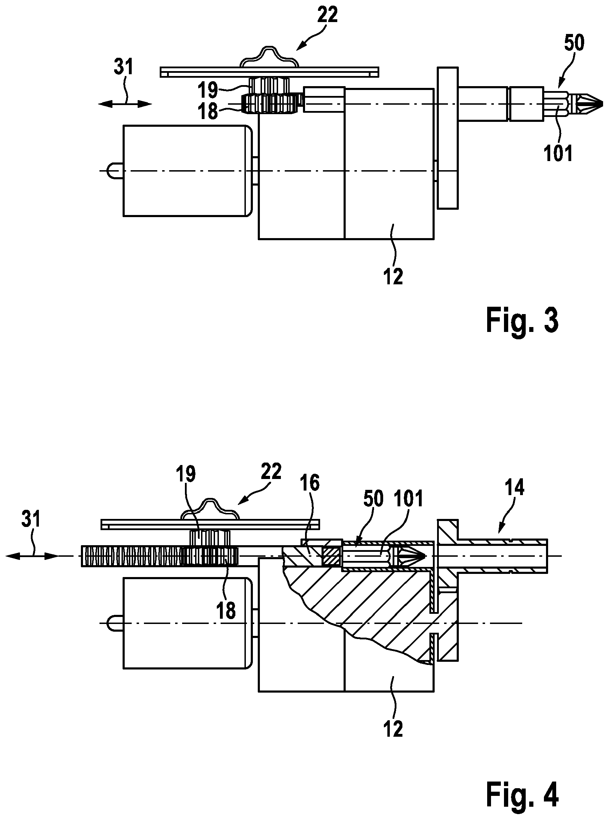

Die Funktionsweise des Überschiebemechanismus 11 ist, wie insbesondere anhand der Fig. 3 und 4 erkennbar ist, derart, dass bei einer Drehung des Drehschalters 22 im Uhrzeiger- bzw. im Gegenuhrzeigersinn die Drehbewegung des Drehschalters 22 bzw. die Rotation der drehfest zueinander angeordneten Zahnräder 18, 19 in eine Linearbewegung des Schiebers 16 in Richtung des Doppelpfeils 31 umgewandelt wird. Durch eine entsprechende Variation der Durchmesser der beiden Zahnräder 18, 19 bzw. deren Zähnezahl ist eine gewünschte Wegübersetzung derart möglich, dass eine relativ geringe Drehung des Drehschalters 22 in einem relativ großen Verschiebeweg des Schiebers 16 resultiert.

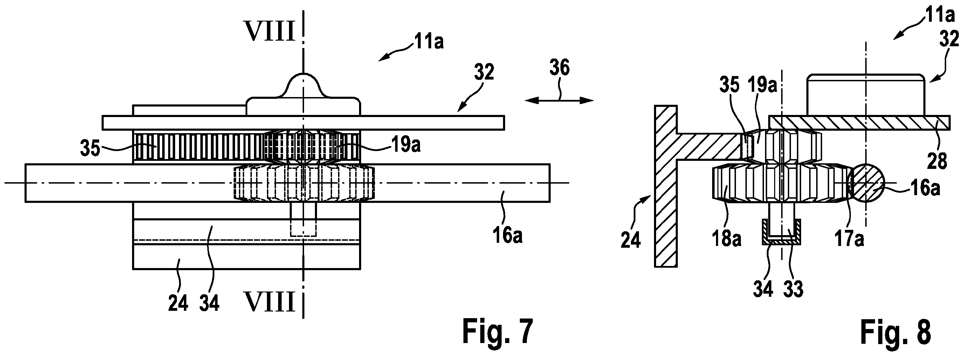

In den Fig. 7 und 8 ist ein modifizierter Überschiebemechanismus 11a dargestellt. Hierbei ist der Drehschalter 22 durch einen ebenfalls bevorzugt zum Gehäuse 24 abgedichteten Schiebeschalter 32 ersetzt, an dessen Unterseite das Zahnrad 19a zusammen mit dem Zahnrad 18a in einer Achse 33 befestigt ist. Die Achse 33 ist am Gehäuse 24 in einer Linearführung 34 gelagert, wobei das Zahnrad 19a mit der Verzahnung 17a des Schiebers 16a zusammenwirkt und das Zahnrad 18a sich an einer ortsfest angeordneten Verzahnung 35 des Gehäuses 24 abstützt. Die Funktionsweise des Überschiebemechanismus 11a ist derart, dass eine Linearbewegung des Schiebeschalters 32 in Richtung des Doppelpfeils 36 in eine Rotation der Zahnräder 18a, 19a umgesetzt wird, welche wiederum den Schieber 16 in Richtung des Doppelpfeils 36 bewegt.

Der Überschiebemechanismus 11a hat gegenüber dem Überschiebemechanismus 11 den Vorteil, dass ein größeres Übersetzungsverhältnis der Zahnräder 18a, 19a im Vergleich zu den Zahnrädern 18, 19 erzielt werden kann, so dass der Durchmesser der Zahnräder 18a, 19a im Vergleich zu den Zahnrädern 18,19 geringer gewählt werden kann.

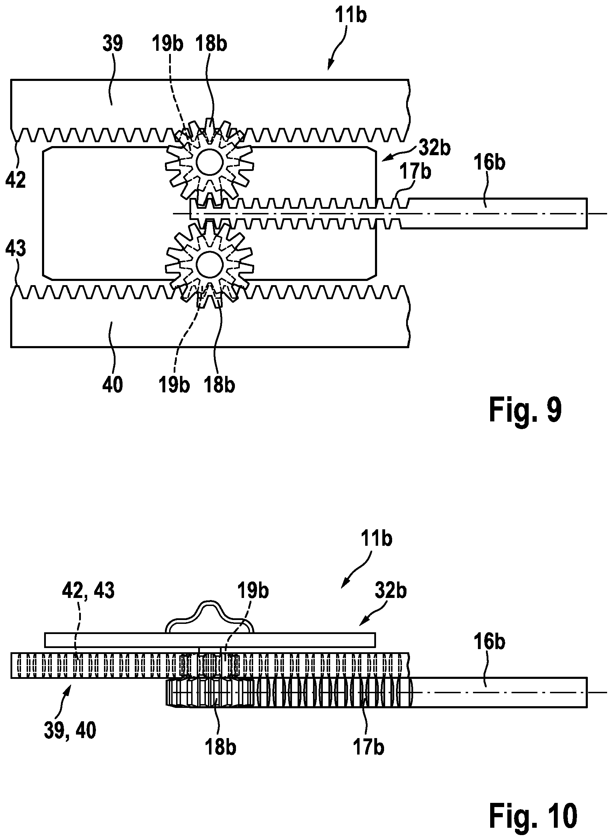

In den Fig. 9 und 10 ist ein dritter Überschiebemechanismus 11 b dargestellt, der im Wesentlichen auf dem Überschiebemechanismus 11a der Fig. 7 und 8 basiert. Der Überschiebemechanismus 11b weist einen Schiebeschalter 32b auf, der über zwei, auf beiden Seiten des Schiebers 16b angeordnete Zahnräder 18b auf die Verzahnung 17b des Schiebers 16b wirkt. Weiterhin sind zwei gehäusefeste Führungen 39, 40 mit Verzahnungen 42, 43 vorgesehen, die mit den Zahnrädern 19b zusammenwirken. Der Überschiebemechanismus 11b zeichnet sich durch eine relativ geringe Reibung, sowie eine besonders gute Führung des Schiebers 16b aus.

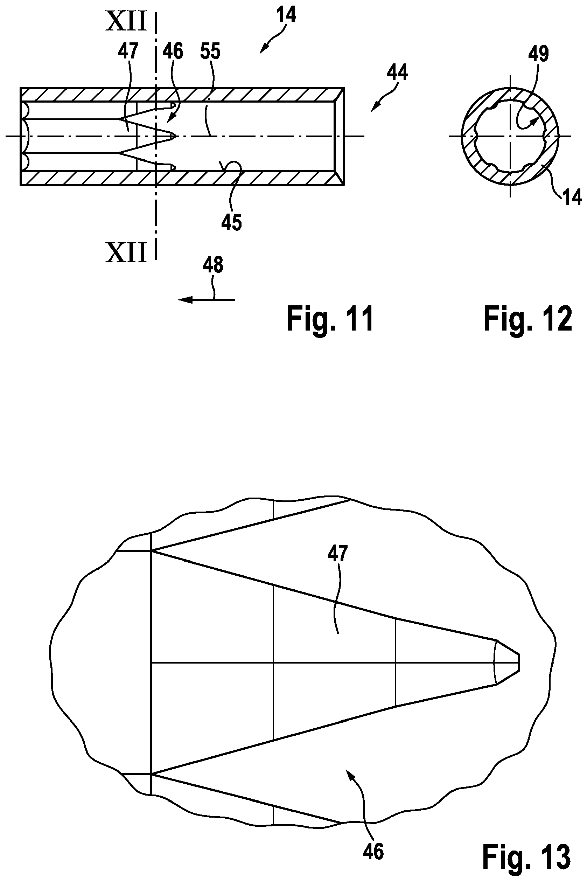

In den Fig. 11 bis 13 ist der dem Werkzeugmagazin 12 zugewandte Teilbereich der Werkzeugaufnahme 14 detaillierter dargestellt. Man erkennt hierbei insbesondere auf der dem Werkzeugmagazin 12 zugewandten Seite 44 am Innenumfang 45 der Werkzeugaufnahme 14 einen Bereich 46, der als Positionierbereich wirkt, und der eine winkelgerechte Positionierung des Werkzeugs 101 in der Werkzeugaufnahme 14 beim Überschieben des Werkzeugs 101 aus dem Werkzeugmagazin 12 in die Werkzeugaufnahme 14 ermöglicht. Hierbei weist der Bereich 46 mehrere, keilartig ausgebildete Einlaufführungen 47 auf, deren Spitzen zur Seite 44 hin ragen. Beim Überschieben eines Werkzeugs 101 in Richtung des Pfeils 48 gelangt das insbesondere einen hexagonalen Querschnitt aufweisende Werkzeug 101 mit seiner Außenkontur 50 (siehe Fig. 3, 4) in Wirkverbindung mit den Einlaufführungen 47 und wird bei seiner Linearbewegung bzw. beim Einschieben derart mit der Innenkontur 49 des Bereichs 46 ausgerichtet, dass beim Überschieben ein Verkanten der Außenkontur 50 des Werkzeugs 101 mit der Innenkontur 49 des Bereichs 46 der Werkzeugaufnahme 14 vermieden wird.

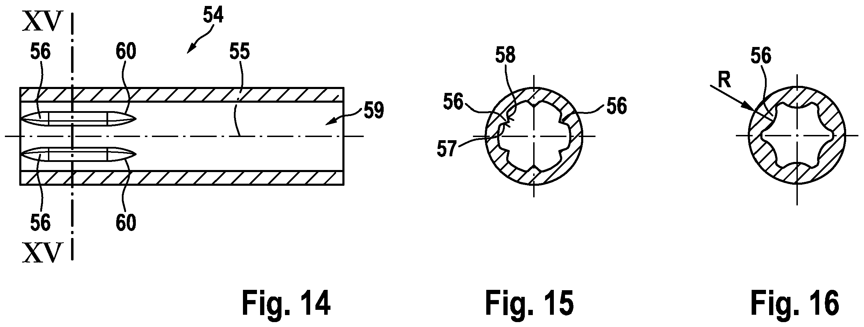

In den Fig. 14 bis 16 ist eine modifizierte Werkzeugaufnahme 54 dargestellt. Die Werkzeugaufnahme 54 zeichnet sich durch mehrere, in gleichmäßigen Winkelabständen am Innenumfang der Werkzeugaufnahme 54 parallel zur Längsachse 55 der Werkzeugaufnahme 54 angeordnete Längsrippen 56 aus. Wie insbesondere anhand der Fig. 15 erkennbar ist, weisen die Längsrippen 56 dabei eine dreiecksförmige Form mit geraden Seitenflächen 57, 58 auf.

In Abänderung kann es jedoch auch entsprechend der Fig. 16 möglich sein, dass die Längsrippen 56 im Querschnitt eine gekrümmte Kontur mit einem Radius R aufweisen. Ferner erkennt man, dass die Längsrippen 56 zumindest auf der dem Werkzeugmagazin 12 zugewandten Seite 59 Einlaufkanten 60 aufweisen, die eine winkelgerechte Ausrichtung des Werkzeugs 101 bzw. dessen Außenkontur 50 zu den Längsrippen 56 ermöglicht.

Die soweit beschriebene erfindungsgemäße Werkzeugmaschine 10 kann in vielfältiger Art und Weise abgewandelt bzw. modifiziert werden. So ist es beispielsweise möglich, anstelle eines manuellen Betriebes des Überschiebemechanismus 11, 11a, 11 b einen motorisch betriebenen Überschiebemechanismus vorzusehen. Auch ist es denkbar, auf die speziell angepasste Werkzeugaufnahme 14, 54 zur winkelgerechten Ausrichtung des Werkzeuges 101 zu verzichten.

## Patentansprüche

1. Motorisch betriebene Werkzeugmaschine(10), insbesondere Handwerkzeugmaschine, mit einem innerhalb eines Gehäuses (24) angeordneten, trommelartigen Werkzeugwechselmagazin (12) mit Werkzeugkammern, wobei das Werkzeugwechselmagazin (12) in einer Wechselposition mit einer seiner Werkzeugkammern mit einer rohrförmigen Werkzeugaufnahme (14; 54) ausgerichtet ist, und mit einem in Längsrichtung der Werkzeugaufnahme (14; 54) bewegbaren Überschiebeelement (15) zum Überschieben eines Werkzeugs (101) aus dem Werkzeugwechselmagazin (12) in die Werkzeugaufnahme (14; 54) sowie aus der Werkzeugaufnahme (14; 54) zurück in das Werkzeugwechselmagazin (12), **dadurch gekennzeichnet, dass** das Überschiebeelement (15) mit einer Getriebeeinrichtung (20) gekoppelt ist, die wenigstens ein Zahnrad (18, 18a, 18b, 19, 19a, 19b) umfasst, dessen Rotationsbewegung in eine Linearbewegung des Überschiebeelements (15) übertragen wird.

2. Werkzeugmaschine nach Anspruch 1, **dadurch gekennzeichnet, dass** das wenigstens eine Zahnrad (18, 18a, 18b, 19, 19a, 19b) mit einem manuell betätigbaren Verstellelement (22; 32; 32b) gekoppelt ist.

3. Werkzeugmaschine nach Anspruch 2, **dadurch gekennzeichnet, dass** das Verstellelement (22; 32; 32b) eine Öffnung (29) des Gehäuses (24) durchsetzt.

4. Werkzeugmaschine nach Anspruch 3, **dadurch gekennzeichnet, dass** das Verstellelement (22; 32; 32b) zum Gehäuse (24) hin abgedichtet angeordnet ist.

5. Werkzeugmaschine nach einem der Ansprüche 1 bis 4, **dadurch gekennzeichnet, dass** das Überschiebeelement (15) zumindest bereichsweise als Zahnstange ausgebildet ist.

6. Werkzeugmaschine nach einem der Ansprüche 2 bis 5, **dadurch gekennzeichnet, dass** mehrere Zahnräder (18, 18a, 18b, 19, 19a, 19b) vorgesehen sind, die eine Wegübersetzung des Verstellelements (22; 32; 32b) an dem Überschiebeelement (15) erzeugen.

7. Werkzeugmaschine nach Anspruch 5 oder 6, **dadurch gekennzeichnet, dass** das Überschiebeelement (15) mit einer Verzahnung (17b) auf einander gegenüberliegenden Seiten in Eingriff mit jeweils einem Zahnrad (18b) angeordnet ist.

8. Werkzeugmaschine nach einem der Ansprüche 1 bis 7, **dadurch gekennzeichnet, dass** an die Werkzeugaufnahme (14) an deren Innenumfang (45) eine Innenkontur (49) und an dem Werkzeug (101) eine Außenkontur (50) ausgebildet ist, die miteinander zusammenwirken und eine drehfeste Anordnung des Werkzeugs (101) zumindest in einer axialen Endposition des Werkzeugs (101) in der Werkzeugaufnahme (14) bewirken, und dass an dem Innenumfang (45) der Werkzeugaufnahme (14) auf der dem Überschiebelement (15) zugewandten Seite (44) ein Bereich (46) mit wenigstens einer Einlaufführung (47) ausgebildet ist, die beim Überschieben des Werkzeugs (101) in die Werkzeugaufnahme (14) eine winkelgerechte Ausrichtung des Werkzeugs (101) zur Werkzeugaufnahme (14) bewirkt.

9. Werkzeugmaschine nach einem der Ansprüche 1 bis 7, **dadurch gekennzeichnet, dass** die Werkzeugaufnahme (54) eine Innenkontur und das Werkzeug (101) eine Außenkontur (50) aufweist, die miteinander zusammenwirken und eine drehfeste Anordnung des Werkzeugs (101) zumindest in einer axialen Endposition des Werkzeugs (101) in der Werkzeugaufnahme (54) bewirken, und dass die am Innenumfang der Werkzeugaufnahme (54) ausgebildete Innenkontur mehrere Längsrippen (56) mit Einlaufkanten (60) aufweist.

10. Werkzeugmaschine nach Anspruch 9, **dadurch gekennzeichnet, dass** die Längsrippen (56) im Querschnitt eine gerundete oder dreieckige Form aufweisen.

11. Werkzeugmaschine nach einem der Ansprüche 5 bis 10, **dadurch gekennzeichnet, dass** die Zahnstange mit einer Verzahnung (17) ausgebildet ist, welche mit zwei Zahnrädern (18, 19) zusammenwirkt, wobei die Verzahnung (17) mit einem ersten Zahnrad (18) kämmt, und das zweite Zahnrad (19) mit einer Verzahnung (21) eines manuell betätigbaren Drehschalters (22) zusammenwirkt.

12. Werkzeugmaschine nach Anspruch 11, **dadurch gekennzeichnet, dass** die beiden Zahnräder (18, 19) einen unterschiedlichen Durchmesser aufweisen und in einer gemeinsamen Drehachse (23) zueinander drehfest gelagert sind, wobei die Drehachse (23) in zwei am Gehäuse (24) angeordneten Querträgern (25, 26) gelagert ist.

13. Werkzeugmaschine nach einem der Ansprüche 6 bis 10, **dadurch gekennzeichnet, dass** ein Schiebeschalter (32, 32b) vorgesehen ist, an dessen Unterseite das erste Zahnrad (18a, 18b) und das zweite Zahnrad (19a, 19b) in einer Achse (33) befestigt ist, wobei die Achse (33) am Gehäuse (24) in einer Linearführung (34) gelagert ist.

14. Werkzeugmaschine nach Anspruch 13, **dadurch gekennzeichnet, dass** das Zahnrad (19a) mit der Verzahnung (17a) des Überschiebeelements (15) zusammenwirkt und das Zahnrad (18a) sich an einer ortsfest angeordneten Verzahnung (35) des Gehäuses (24) abstützt.

15. Werkzeugmaschine nach Anspruch 13, **dadurch gekennzeichnet, dass** der Schiebeschalter (32b) über zwei, auf beiden Seiten des als Schieber (16b) ausgebildeten Überschiebeelements (15) angeordnete Zahnräder (18b) auf die Verzahnung (17b) des Schiebers (16b) wirkt.

16. Werkzeugmaschine nach Anspruch 15, **dadurch gekennzeichnet, dass** zwei gehäusefeste Führungen (39, 40) mit Verzahnungen (42, 43) vorgesehen sind, die mit den Zahnrädern (19b) zusammenwirken.

## Claims

1. Motor-powered machine tool (10), in particular hand-held machine tool, having a drum-like tool change magazine (12) with tool chambers which is arranged within a housing (24), the tool change magazine (12) being aligned by way of one of its tool chambers in a change position with a tubular tool receptacle (14; 54), and having a sliding element (15) which can be moved in the longitudinal direction of the tool receptacle (14; 54) for sliding a tool (101) from the tool change magazine (12) into the tool receptacle (14; 54) and from the tool receptacle (14; 54) back into the tool change magazine (12), **characterized in that** the sliding element (15) is coupled to a gear-mechanism device (20) which comprises at least one gearwheel (18, 18a, 18b, 19, 19a, 19b), the rotational movement of which is converted into a linear movement of the sliding element (15).

2. Machine tool according to Claim 1, **characterized in that** the at least one gearwheel (18, 18a, 18b, 19, 19a, 19b) is coupled to a manually actuable adjusting element (22; 32; 32b).

3. Machine tool according to Claim 2, **characterized in that** the adjusting element (22; 32; 32b) penetrates an opening (29) of the housing (24).

4. Machine tool according to Claim 3, **characterized in that** the adjusting element (22; 32; 32b) is arranged such that it is sealed with respect to the housing (24).

5. Machine tool according to one of Claims 1 to 4, **characterized in that** the sliding element (15) is configured at least in regions as a toothed rack.

6. Machine tool according to one of Claims 2 to 5, **characterized in that** a plurality of gearwheels (18, 18a, 18b, 19, 19a, 19b) are provided which produce a displacement transmission ratio of the adjusting element (22; 32; 32b) on the sliding element (15).

7. Machine tool according to Claim 5 or 6, **characterized in that** the sliding element (15) is arranged so as to be in engagement by way of a toothing system (17b) on mutually opposite sides with in each case one gearwheel (18b).

8. Machine tool according to one of Claims 1 to 7, **characterized in that** an inner contour (49) is formed on the inner circumference (45) of the tool receptacle (14) and an outer contour (50) is formed on the tool (101), which contours interact with one another and bring about a rotationally fixed arrangement of the tool (101) at least in an axial end position of the tool (101) in the tool receptacle (14), and **in that** a region (46) with at least one entry guide (47) is formed on the inner circumference (45) of the tool receptacle (14) on the side (44) which faces the sliding element (15), which entry guide (47), during sliding of the tool (101) into the tool receptacle (14), brings about an angularly correct alignment of the tool (101) with respect to the tool receptacle (14).

9. Machine tool according to one of Claims 1 to 7, **characterized in that** the tool receptacle (54) has an inner contour and the tool (101) has an outer contour (50), which contours interact with one another and bring about a rotationally fixed arrangement of the tool (101) at least in an axial end position of the tool (101) in the tool receptacle (54), and **in that** the inner contour which is formed on the inner circumference of the tool receptacle (54) has a plurality of longitudinal ribs (56) with entry edges (60).

10. Machine tool according to Claim 9, **characterized in that** the longitudinal ribs (56) have a rounded or triangular cross section.

11. Machine tool according to one of Claims 5 to 10, **characterized in that** the toothed rack is configured with a toothing system (17) which interacts with two gearwheels (18, 19), the toothing system (17) meshing with a first gearwheel (18), and the second gearwheel (19) interacting with a toothing system (21) of a manually actuable rotary switch (22).

12. Machine tool according to Claim 11, **characterized in that** the two gearwheels (18, 19) have a different diameter and are mounted in a common rotational axle (23) fixedly in terms of rotation with respect to one another, the rotational axle (23) being mounted in two crossmembers (25, 26) which are arranged on the housing (24).

13. Machine tool according to one of Claims 6 to 10, **characterized in that** a slide switch (32, 32b) is provided, to the underside of which the first gearwheel (18a, 18b) and the second gearwheel (19a, 19b) are fastened in an axle (33), the axle (33) being mounted on the housing (24) in a linear guide (34).

14. Machine tool according to Claim 13, **characterized in that** the gearwheel (19a) interacts with the toothing system (17a) of the sliding element (15), and the gearwheel (18a) is supported on a toothing system (35) of the housing (24), which toothing system (35) is arranged in a stationary manner.

15. Machine tool according to Claim 13, **characterized in that** the slide switch (32b) acts on the toothing system (17b) of the slide (16b) via two gearwheels (18b) which are arranged on both sides of the sliding element (15) which is configured as a slide (16b).

16. Machine tool according to Claim 15, **characterized in that** two guides (39, 40) which are fixed to the housing are provided with toothing systems (42, 43) which interact with the gearwheels (19b).

## Revendications

1. Machine-outil entraînée par moteur (10), en particulier machine-outil manuelle, avec un magasin de changement d'outil de type tambour (12) disposée à l'intérieur d'un boîtier (24), avec des chambres d'outil, le magasin de changement d'outil (12) étant orienté dans une position de changement avec l'une de ses chambres d'outil avec un logement d'outil de forme tubulaire (14 ; 54), et avec un élément de transfert (15) déplaçable dans la direction longitudinale du logement d'outil (14 ; 54) pour transférer un outil (101) hors du magasin de changement d'outil (12) dans le logement d'outil (14 ; 54) et hors du logement d'outil (14 ; 54) de retour dans le magasin de changement d'outil (12), **caractérisée en ce que** l'élément de transfert (15) est accouplé à un dispositif de transmission (20) qui comprend au moins une roue dentée (18, 18a, 18b, 19, 19a, 19b) dont le mouvement de rotation est converti en un mouvement linéaire de l'élément de transfert (15).

2. Machine-outil selon la revendication 1, **caractérisée en ce que** l'au moins une roue dentée (18, 18a, 18b, 19, 19a, 19b) est accouplée à un élément de réglage (22 ; 32 ; 32b) pouvant être commandé manuellement.

3. Machine-outil selon la revendication 2, **caractérisée en ce que** l'élément de réglage (22 ; 32 ; 32b) traverse une ouverture (29) du boîtier (24).

4. Machine-outil selon la revendication 3, **caractérisée en ce que** l'élément de réglage (22 ; 32 ; 32b) est disposé de manière étanchéifiée par rapport au boîtier (24).

5. Machine-outil selon l'une quelconque des revendications 1 à 4, **caractérisée en ce que** l'élément de transfert (15) est réalisé au moins en partie sous forme de crémaillère.

6. Machine-outil selon l'une quelconque des revendications 2 à 5, **caractérisée en ce que** plusieurs roues dentées (18, 18a, 18b, 19, 19a, 19b) sont prévues, lesquelles génèrent une transmission de la course de l'élément de réglage (22 ; 32 ; 32b) à l'élément de transfert (15).

7. Machine-outil selon la revendication 5 ou 6, **caractérisée en ce que** l'élément de transfert (15) est disposé, avec une denture (17b) sur des côtés mutuellement opposés, en prise avec une roue dentée respective (18b).

8. Machine-outil selon l'une quelconque des revendications 1 à 7, **caractérisée en ce qu'**un contour intérieur (49) est réalisé au niveau du logement d'outil (14) sur sa périphérie intérieure (45) et un contour extérieur (50) est réalisé sur l'outil (101), lesquels coopèrent l'un avec l'autre et créent un agencement solidaire en rotation de l'outil (101), au moins dans une position d'extrémité axiale de l'outil (101), dans le logement d'outil (14), et **en ce qu'**à la périphérie intérieure (45) du logement d'outil (14) sur le côté (44) tourné vers l'élément de transfert (15), est réalisée une région (46) avec au moins un guide d'entrée (47) qui, lors du transfert de l'outil (101) dans le logement d'outil (14), provoque une orientation sans décalage de l'outil (101) par rapport au logement d'outil (14).

9. Machine-outil selon l'une quelconque des revendications 1 à 7, **caractérisée en ce que** le logement d'outil (54) présente un contour intérieur et l'outil (101) présente un contour extérieur (50), lesquels coopèrent l'un avec l'autre et créent une agencement solidaire en rotation de l'outil (101), au moins dans une position d'extrémité axiale de l'outil (101), dans le logement d'outil (54), et **en ce que** le contour intérieur réalisé sur la périphérie intérieure du logement d'outil (54) présente plusieurs nervures longitudinales (56) avec des arêtes d'entrée (60).

10. Machine-outil selon la revendication 9, **caractérisée en ce que** les nervures longitudinales (56) présentent en section transversale une forme arrondie ou triangulaire.

11. Machine-outil selon l'une quelconque des revendications 5 à 10, **caractérisée en ce que** la crémaillère est réalisée avec une denture (17) qui coopère avec deux roues dentées (18, 19), la denture (17) s'engrenant avec une première roue dentée (18) et la deuxième roue dentée (19) coopérant avec une denture (21) d'un commutateur tournant (22) à commande manuelle.

12. Machine-outil selon la revendication 11, **caractérisée en ce que** les deux roues dentées (18, 19) présentent un diamètre différent et sont supportées de manière solidaire en rotation l'une par rapport à l'autre dans un axe de rotation commun (23), l'axe de rotation (23) étant supporté dans des traverses (25, 26) disposées sur le boîtier (24).

13. Machine-outil selon l'une quelconque des revendications 6 à 10, **caractérisée en ce qu'**un interrupteur coulissant (32, 32b) est prévu, au niveau du côté inférieur duquel la première roue dentée (18a, 18b) et la deuxième roue dentée (19a, 19b) sont fixées dans un axe (33), l'axe (33) étant supporté dans un guide linéaire (34) sur le boîtier (24).

14. Machine-outil selon la revendication 13, **caractérisée en ce que** la roue dentée (19a) coopère avec la denture (17a) de l'élément de transfert (15) et la roue dentée (18a) s'appuie contre une denture (35) du boîtier (24) disposée fixement.

15. Machine-outil selon la revendication 13, **caractérisée en ce que** l'interrupteur coulissant (32b), par le biais de deux roues dentées (18b) disposées des deux côtés de l'élément de transfert (15) réalisé sous forme de coulisseau (16b), agit sur la denture (17b) du coulisseau (16b).

16. Machine-outil selon la revendication 15, **caractérisée en ce que** deux guides fixés au boîtier (39, 40) sont pourvus de dentures (42, 43) qui coopèrent avec les roues dentées (19b).
